# EUROPÄISCHE PATENTSCHRIFT

(11) **EP 1 913 674 B1**
(45) Veröffentlichungstag und Bekanntmachung des Hinweises auf die Patenterteilung: **31.05.2017**
(21) Anmeldenummer: 06778122.9
(22) Anmeldetag: 02.08.2006
(51) Int. Cl.: H02K 3/50, H02K 3/38

(54) **ELEKTRISCHE MASCHINE MIT EINER STIRNSEITIGEN UMLENKUNG VON ELEKTRISCHEN LEITERN**
ELECTRIC MACHINE FEATURING DEFLECTION OF ELECTRICAL CONDUCTORS ON A FACE THEREOF
MACHINE ÉLECTRIQUE COMPRENANT UNE DÉVIATION CÔTÉ FRONTAL DES CONDUCTEURS ÉLECTRIQUES

(30) Priorität: 08.08.2005 DE 102005037373
(43) Veröffentlichungstag der Anmeldung: 23.04.2008
(73) Patentinhaber: Siemens Aktiengesellschaft, 80333 München (DE)
(72) Erfinder: LYSCHICK, Eduard, 97616 Bad Neustadt (DE); MAHLMEISTER, Fridolin, 97702 Münnerstadt (DE); MENZ, Michael, 97618 Hohenroth (DE); WÖHNER, Norbert, 97618 Heustreu (DE)
(86) Internationale Anmeldenummer: PCT/EP2006/064968
(87) Internationale Veröffentlichungsnummer: WO 2007/017442

(56) Entgegenhaltungen:
- CH-A- 493 137
- FR-A1- 2 778 284
- GB-A- 2 310 766
- US-A- 4 563 606

## Beschreibung

Die Erfindung betrifft eine elektrische Maschine mit einer Drehachse und einem Grundkörper, der zwei axiale Stirnseiten sowie Nuten zur Aufnahme von elektrischen Leitern eines Wicklungssystems enthält.

Eine derartige elektrische Maschine ist beispielsweise als Elektromotor ausgebildet. Zur Fertigung des Wicklungssystems wird der insbesondere als Ständer oder Ständer-Blechpaket ausgeführte Grundkörper neuerdings mit einem sogenannten Nadelwickler bewickelt, wobei eine Wickeldüse des Nadelwicklers einen elektrischen Leiter im Inneren einer Ständerbohrung in eine der Nuten einlegt und sich in axialer Richtung, d. h. in Richtung der Drehachse, fortbewegt. An der Stirnseite wird die Wickeldüse (= Nadel) zunächst noch ein Stück in axialer Richtung nach außen bewegt. Danach wird das Ständer-Blechpaket so weit um die Drehachse gedreht, bis die Nutstirnöffnung derjenigen Nut auf Höhe der Wickeldüse erscheint, in der der elektrische Leiter in umgekehrter Richtung innerhalb der Ständerbohrung zurückgeführt wird. Auf der gegenüberliegenden Stirnseite läuft der Vorgang spiegelbildlich ab. Dies wird entsprechend der gewünschten Windungszahl wiederholt, so dass sich an beiden Stirnseiten Wickelköpfe ausbilden.

Das Wicklungssystem kann mehrere Teilwicklungen umfassen, die nacheinander mit dem beschriebenen Verfahren in das Ständer-Blechpaket eingebracht werden. Dabei ist die Umlenk-Weglänge an den Stirnseiten bei später eingebrachten Teilwicklungen größer als bei den zuerst gefertigten Teilwicklungen. Dadurch weichen die mittleren Spulenlängen der einzelnen Teilwicklungen voneinander ab. Außerdem steigt der Materialeinsatz bei den später eingebrachten Teilwicklungen, wodurch die einzelnen Teilwicklungen auch Unterschiede hinsichtlich ihres elektrischen Widerstandes aufweisen können.

Aus der GB 2 310 766 A ist eine elektrische Maschine mit einer Drehachse und einem Grundkörper, der zwei axiale Stirnseiten sowie Nuten zur Aufnahme eines Wicklungssystems enthält, bekannt. Die Nuten haben an den jeweiligen Stirnseiten eine Nutstirnöffnung, aus der die elektrischen Leiter des Wicklungssystems herausgeführt sind. An der Stirnseite sind die elektrischen Leiter in Überbrückungsbereichen, die in Umfangsrichtung verlaufen, verlegt. Hierzu ist an jeder Stirnseite ein Führungselement mit axial vorstehenden Trennstegen vorgesehen.

Die Aufgabe der Erfindung besteht deshalb darin, eine elektrische Maschine der eingangs bezeichneten Art anzugeben, die ein hochwertiges Wicklungssystem aufweist.

Diese Aufgabe wird gelöst durch die Merkmale des unabhängigen Patentanspruchs 1. Bei der erfindungsgemäßen elektrischen Maschine handelt es sich um eine solche, bei der
a) die Nuten an den Stirnseiten jeweils eine Nutstirnöffnüng aufweisen,
b) die elektrischen Leiter an einer der Stirnseiten
   b1) aus mindestens einer der Nutstirnöffnungen herausgeführt sind,
   b2) innerhalb eines in Umfangsrichtung an der Stirnseite verlaufenden Überbrückungsbereichs verlegt sind, und
   b3) in mindestens eine andere der Nutstirnöffnungen eingeführt sind,
c) an der Stirnseite im Überbrückungsbereich ein erstes Führungselement zur Führung der elektrischen Leiter einer ersten Teilwicklung des Wicklungssystems angeordnet ist, und
d) an der Stirnseite eine Endscheibe mit mindestens einem axial vorstehenden Trennelement angeordnet ist und das erste Führungselement mit einem Boden an dem Trennelement anliegt.
e) das erste Führungselement in Umfangsrichtung verläuft und die Form eines Kreisbogenabschnitts hat Das erfindungsgemäß eingesetzte Führungselement ermöglicht eine sehr gleichmäßige und kontrollierte Bewicklung auch an der Stirnseite. Außerdem wird eine gute Raumausnutzung vor allem auch in radialer Richtung erreicht, so dass auch eine verglichen mit den bekannten elektrischen Maschinen kürzere axiale Ausdehnung resultiert.

Mittels des Führungselements ist ein kontrolliertes Anordnen der einzelnen Lagen der elektrischen Leiter möglich, so dass der Wickelkopf an der Stirnseite definiert ausgestaltet werden kann. Insbesondere lassen sich auf diese Weise auch nacheinander hergestellte Teilwicklungen mit im Wesentlichen gleichen Windungslängen und im Wesentlichen gleichen elektrischen Widerständen realisieren.

Insgesamt führt der erfindungsgemäße Einsatz des Führungselements also zu einer sehr präzisen und hochwertigen Bewicklung. Insbesondere wird verglichen mit einer Bewicklung ohne Führungselement eine Reduzierung der mittleren Spulenlänge erreicht. Dies führt zu einer Verbesserung der elektrischen Betriebsdaten der elektrischen Maschine bei gleichzeitig reduziertem Materialeinsatz.

Aufgrund des an der Stirnseite der Endscheibe anliegenden ersten Führungselements wird eine Lagesicherung des Führungselements und als Folge davon eine hohe Fertigungsgenauigkeit erreicht. Insbesondere ist die elektrische Isolierung zwischen den elektrischen Leitern benachbarter Teilwicklungen oder zwischen den elektrischen Leitern und dem Grundkörper aufgrund des lagefixierten Führungselements gewährleistet.

Vorteilhafte Ausgestaltungen der erfindungsgemäßen elektrischen Maschine ergeben sich aus den Merkmalen der von Anspruch 1 abhängigen Ansprüche.

Bei weiteren bevorzugten Ausgestaltungen ist das erste Führungselement U- oder L-profiliert. Dadurch wird eine besonders gute Führung der elektrischen Leiter erreicht.

Vorzugsweise kann weiterhin das erste Führungselement in Umfangsrichtung verlaufen und die Form eines Kreisbogenabschnitts haben. Dann ist es besonders gut an die üblicherweise zylinderförmige Geometrie des Grundkörpers und an den ebenfalls in Gestalt eines Kreisbogenabschnitts ausgebildeten Überbrückungsbereich angepasst.

Weiterhin ist es vorteilhaft, wenn axial benachbart zum ersten Führungselement ein weiteres Führungselement zur Führung der elektrischen Leiter einer weiteren Teilwicklung des Wicklungssystems angeordnet ist. Auf diese Weise lassen sich auch mehrere Teilwicklungen kontrolliert und präzise fertigen rund insbesondere an den Stirnseiten sehr platzsparend nebeneinander anordnen.

Vorzugsweise sind die Führungselemente dann außerdem stapelbar ausgebildet, so dass eine eng benachbarte und damit raumsparende Anordnung möglich ist.

Bevorzugt ist es weiterhin, dass das erste Führungselement einen Schenkel und einen Boden aufweist, die an einer Knickkante zusammenstoßen, und längs der Knickkante in einem von den elektrischen Leitern abgewandten Außenbereich eine Ausnehmung verläuft. In die Ausnehmung kann ein Boden eines weiteren insbesondere L-profilierten Führungselements eingesteckt und damit lagefixiert werden. Dieses günstige Ineinanderstecken reduziert außerdem auch die axiale Ausdehnung.

Eine andere günstige Ausgestaltung zeichnet sich dadurch aus, dass das erste Führungselement elektrisch isolierend ausgebildet ist. Dies erhöht die elektrische Sicherheit und auch die Funktionstüchtigkeit der elektrischen Maschine insgesamt. Insbesondere ist die elektrische Isolation gegenüber dem Grundkörper so auch dann gewährleistet, wenn keine elektrisch isolierende Endscheibe verwendet wird.

Weiterhin ist es bevorzugt, dass das erste Führungselement aus einem Kunststoffmaterial besteht. Es lässt sich dann leicht herstellen, beispielsweise mittels eines gängigen Spritzgussverfahrens. Außerdem erfüllen viele Kunststoffmaterialien die Anforderungen an die elektrische Isolationsfähigkeit.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1: ein Ausführungsbeispiel eines zu bewickelnden Grundkörpers einer elektrischen Maschine mit an den Stirnseiten angeordneten Endscheiben in einer Draufsicht,
- FIG 2: den Grundkörper gemäß FIG 1 in einer Querschnittsdarstellung,
- FIG 3 und 4: ein Ausführungsbeispiel eines Führungselements und eines auf die Endscheibe gemäß FIG 1 während eines Wickelvorgangs aufgesetzten Wickelhilfskörpers,
- FIG 5: den an seiner Unterseite Befestigungsaussparungen aufweisenden Wickelhilfskörper gemäß FIG 3 und 4,
- FIG 6: ein Ausführungsbeispiel eines weiteren in Verbindung mit dem Wickelhilfskörper gemäß FIG 3 bis 5 eingesetzten Führungselements,
- FIG 7: das Führungselement gemäß FIG 6 in bewickeltem Zustand,
- FIG 8: ein Ausführungsbeispiel zweier bereits bewickelter Führungselemente gemäß FIG 6 und eines noch zu bewickelnden dritten Führungselements gemäß FIG 6 sowie eines auf die Endscheibe gemäß FIG 1 während eines dritten Teilwickelvorgangs aufgesetzten Wickelhilfskörpers,
- FIG 9: ein Ausführungsbeispiel eines Wickelhilfskörpers mit einem Befestigungsfortsatz an seiner Unterseite und
- FIG 10 bis 12: Ausführungsbeispiele von Wickelhilfskörpern mit verschiedener Kreisbogenüberdeckung.

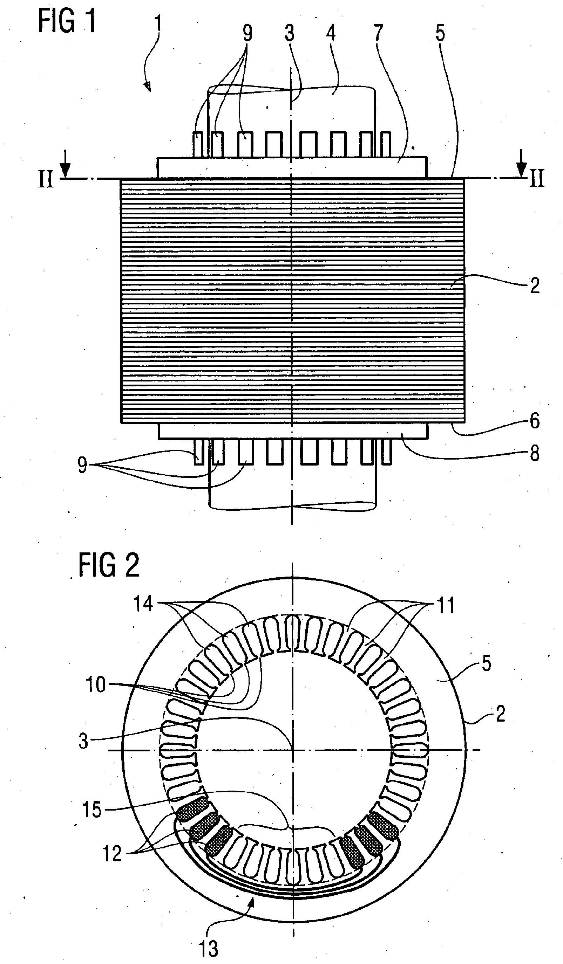

Einander entsprechende Teile sind in FIG 1 bis 12 mit denselben Bezugszeichen versehen.

In FIG 1 ist ein Ausführungsbeispiel einer als Elektromotor ausgeführten elektrischen Maschine 1 mit einem zu bewickelnden Grundkörper 2 und einem um eine Drehachse 3 drehbar gelagerten Läufer 4 dargestellt. Der Grundkörper 2 gehört zu einem Ständer der elektrischen Maschine 1 und ist als Ständer-Blechpaket ausgeführt. Er weist axiale Stirnseiten 5 und 6 auf, an denen jeweils eine elektrisch isolierende Endscheibe 7 bzw. 8 angeordnet ist. Die Endscheiben 7 und 8 weisen axial vorstehende und in Umfangsrichtung gleichmäßig verteilt angeordnete Trennstege 9 auf.

Gemäß der Querschnittsdarstellung von FIG 2 weist der Grundkörper 2 eine Ständerinnenbohrung auf, in der der in FIG 2 nicht eingetragene Läufer 4 platziert ist. Angrenzend an eine Innenwand dieser Ständerinnenbohrung sind axial verlaufende und über den Umfang gleichmäßig verteilte Nuten 10 im Grundkörper 2 vorgesehen. Gegebenenfalls kann der Nutverlauf abweichend von der exakt axialen Richtung eine leichte Schrägung aufweisen. Zwischen den Nuten 10 sind Nutstege 11 angeordnet.

Die isolierenden Endscheiben 7 und 8 sind so an den Stirnseiten 5 bzw. 6 angeordnet, dass ihre Trennstege 9 mit den Nutstegen 11 fluchten. Die Anzahl der Trennstege 9 und der Nutstege 11 ist gleich.

Innerhalb der Nuten 10 werden elektrische Leiter 12 eines in den Grundkörper 2 einzubringenden elektrischen Wicklungssystems 13 platziert. Im Ausführungsbeispiel gemäß FIG 2 ist der Grundkörper 2 in einem teilbewickelten Zustand gezeigt. Nur in einigen der Nuten 10 sind elektrische Leiter 12 angeordnet. An den Stirnseiten 5 und 6 weisen die Nuten 10 Nutstirnöffnungen 14 auf, aus denen die elektrischen Leiter 12 hervortreten, um außerhalb des Grundkörpers 2 an den Stirnseiten 5 und 6 umgelenkt und zu einer anderen der Nuten 10 geführt zu werden. Diese Umlenkung und Führung der elektrischen Leiter 12 erfolgt im Ausführungsbeispiel gemäß FIG 1 und 2 mittels der isolierenden Endscheiben 7 und 8. In FIG 2 ist diese Umlenkung und Leiterführung in einem schematisch angedeutet.

Die Endscheiben 7 und 8 sind universell einsetzbar. Mit ihnen lassen sich.Wicklungssysteme 13 für verschiedene Polzahlen realisieren. Bei der Bewicklung des Grundkörpers 2 und auch der Endscheiben 7 und 8 mit den elektrischen Leitern 12 kann es zu hohen Zugspannungen und zu einer hohen Reibung zwischen den Trennstegen 9 und den elektrischen Leitern 12 kommen.

Dies kann zum einen zu einem Verbiegen und/oder Beschädigen der Trennstege und zum anderen zu einer Beschädigung der elektrischen Leiter, beispielsweise deren elektrischer Isolierung, führen.

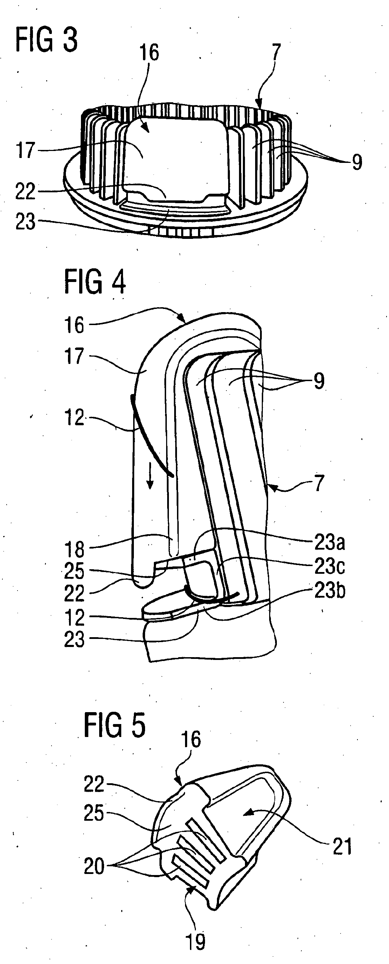

Um diese nachteiligen Wirkungen beim Wickelvorgang zu verhindern, werden die Trennstege 9 in einem Überbrückungsbereich 15 mittels eines in FIG 3 bis 6 gezeigten Wickelhilfskörpers 16 bedeckt und somit geschützt. Der Wickelhilfskörper 16 ist als Wickelschuh ausgebildet und hat die Gestalt eines Kreisbogenabschnitts. Seine Außenwand 17 ist glatt und hat abgerundete Außenwandkanten 18 : Er weist eine abgerundete Oberflächenkontur auf und ist im Ausführungsbeispiel aus Aluminium hergestellt.

Bei der Bewicklung des Grundkörpers 2 erfolgt die Umlenkung und Führung der elektrischen Leiter 12 nicht mehr mittels der Trennstege 9 der Endscheiben 7 oder 8, sondern mittels des Wickelhilfskörpers 16. Zur Herstellung einer Teilwicklung mit mehreren Windungen wird jeweils ein Wickelhilfskörper 16 an einer der beiden Stirnseiten 5 und 6 so angeordnet, dass er innerhalb des in Umfangsrichtung verlaufenden Überbrückungsbereichs 15 die während dieses Teilwickelvorgangs nicht zu bewickelnden Nutstirnöffnungen 14 abdeckt. Der elektrische Leiter 12 wird in eine der Nuten 10, deren Nutstirnöffnung 14 auf einer der in Umfangsrichtung weisenden Seite des Überbrückungsbereichs 15 liegt, eingelegt und durch die zugehörige unabgedeckte Nutstirnöffnung 14 herausgeführt. Dann wird er an der betreffenden Stirnseite 5 oder 6 mittels des Wickelhilfskörpers 16 umgelenkt und zu einer weiteren unabgedeckten der Nutstirnöffnungen 14, die auf der anderen in Umfangsrichtung weisenden Seite des Überbrückungsbereichs 15 liegt, geführt, um dort in die zugehörige Nut 10 eingelegt und zur anderen Stirnseite 6 bzw. 5 geführt zu werden. Dort wiederholt sich der Vorgang spiegelbildlich, so dass eine komplette Windung hergestellt wird. Je nach vorgesehener Windungszahl wird dieser für eine Windung beschriebene Vorgang wiederholt. Nach Abschluss dieses Teilwickelvorgangs werden die auf beiden

Stirnseiten 5 und 6 hilfsweise angeordneten Wickelhilfskörper 16 wieder entfernt. Der beschriebene Wickelvorgang lässt sich insbesondere automatisch mittels eines Nadelwicklers durchführen.

An einer Unterseite 19 des Wickelhilfskörpers 16 sind Befestigungsaussparungen 20 vorgesehen, die von der Unterseite 19 ausgehend in den Wickelhilfskörper 16 hineinreichen. Die Befestigungsaussparungen 20 dienen zur Aufnahme der Trennstege 9. Auch an seinen beiden in Umfangsrichtung weisenden Seitenwangen hat der Wickelhilfskörper 16 jeweils eine seitliche Aussparung 21, mittels der jeweils einer der beiden am Rand des Überbrückungsbereichs 15 angeordneten Trennstege 9 gehalten und geschützt wird.

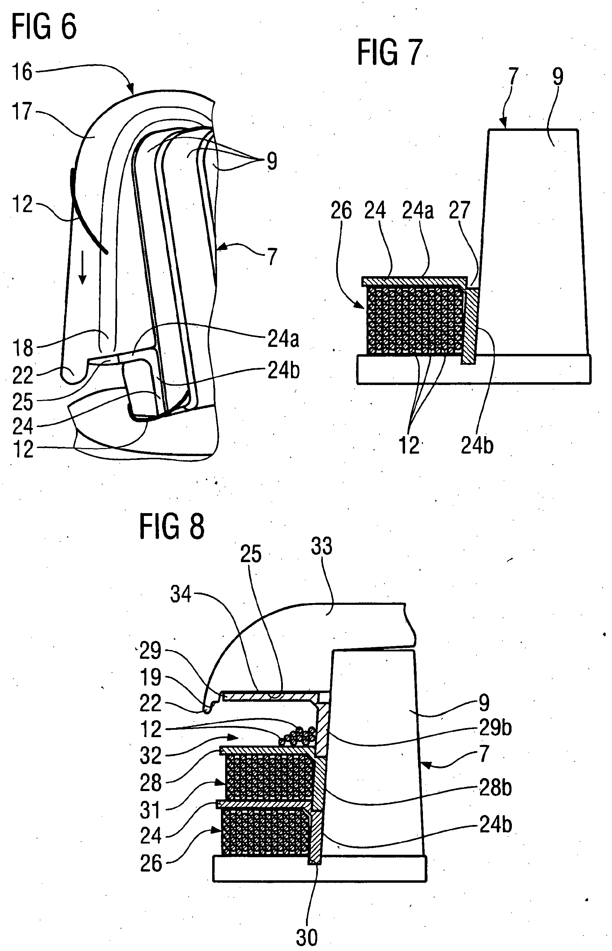

Die Außenwand 17 hat einen über die Unterseite 19 hinausreichenden Vorsprung 22, der sich in Umfangsrichtung nicht über den gesamten Kreisbogenabschnitt erstreckt, den der übrige Wickelhilfskörper 16 abdeckt. Der Vorsprung 22 dient wie auch die glatte Außenwand 17 zur gezielten Führung der elektrischen Leiter 12. Der gerade einzubringende elektrische Leiter 12 wird im Zusammenhang mit der Umlenkung im Außenbereich des Grundkörpers 2 über die glatte Außenwand 17 des Wickelhilfskörpers 16 geführt und - wie in FIG 4 und 6 durch die Richtungspfeile angedeutet nach unten gezogen. Der am Ende in dieser Bewegungsrichtung vorgesehene Vorsprung 22 lässt den elektrischen Leiter 12 gezielt in ein zwischen dem Wickelhilfskörper 16 und der Endscheibe 7 angeordnetes Führungselement 23 mit U-Profil (FIG 3 und 4) oder Führungselement 24 mit L-Profil (FIG 6) hineinrutschen oder -gleiten. Das U-profilierte Führungselement 23 hat zwei U-Schenkel 23a und 23b sowie einen U-Boden 23c. Das L-profilierte Führungselement 24 hat einen L-Schenkel 24a sowie einen L-Boden 24b. Beide Führungselemente 23 und 24 sind außerdem kreisbogenförmig ausgebildet. Im in FIG 4 und 6 gezeigten Zustand befindet sich jeweils eine Windung des elektrischen Leiters 12 bereits in dem jeweils zugehörigen Führungselement 23 bzw. 24, während die nächste Windung gerade hergestellt wird, wobei der elektrische Leiter 12 an der glatten Außenwand 17 des Wickelhilfskörpers 16 entlang geführt wird.

An der Unterseite 19 des Wickelhilfskörpers 16 ist angrenzend an den Vorsprung 22 eine Anlagefläche 25 für das Führungselement 23 oder 24 vorgesehen. Mittels der Anlagefläche 25 wird das Führungselement 23 und 24 so in seiner Lage fixiert, dass es während des Wickelvorgangs zu keiner unerwünschten Positionsverschiebung kommt. Die Führungselemente 23 und 24 haben eine elektrisch isolierende Funktion, die aufgrund dieser vorteilhaften Lagefixierung nach dem Wickelvorgang in vollem Umfang gewährleistet ist. Bei anderen bekannten Isolierungen von Teilwicklungen des Wicklungssystems 13 kann es unter dem Einfluss von Zugspannungen während des Wickelvorgangs zu einer Verschiebung der Isolierung und damit zu einer Verschlechterung der isolierenden Eigenschaften kommen. Dieser Nachteil wird durch die Lagefixierung des Führungselements 23 oder 24 umgangen.

Der Wickelhilfskörper 16 ermöglicht eine weitgehend gleichmäßige Bewicklung der Führungselemente 23 und 24 mit den einzelnen Windungen des elektrischen Leiters 12. Die Abmessungen einer so hergestellten und in FIG 7 gezeigten Teilwicklung 26 können vorab über eine entsprechende Dimensionierung des Wickelhilfskörpers 16 und des Führungselements 23 bzw. 24 voreingestellt werden. Insbesondere wird dadurch eine gute Raumausnutzung vor allem in radialer Richtung erreicht. Bei anderen Bewicklungsverfahren, die ohne den Wickelhilfskörper 16 und das Führungselement 23 oder 24 arbeiten, erstrecken sich die resultierenden Teilwicklungen mehr in axiale und weniger in radiale Richtung. Dadurch ergibt sich ein axial längerer Gesamtaufbau. Demgegenüber zeichnet sich die elektrische Maschine 1, die mit dem günstigen Bewicklungsverfahren und unter Verwendung der günstigen Führungselemente 23 und 24 bewickelt wird, durch eine deutlich bessere Raumausnutzung und damit durch eine kürzere axiale Ausdehnung aus. Das günstige Bewicklungsverfahren und die günstigen Führungselemente 23 und 24 können dabei entweder in Kombination oder auch als Einzelmaßnahme, also entweder das Bewicklungsverfahren oder die Führungselemente 23 und 24, zum Einsatz kommen.

Außerdem liegt das so resultierende Wicklungssystem 13 auch im Bereich der Stirnseiten 5 und 6, in denen nicht näher dargestellte Wickelköpfe gebildet werden, sehr eng an dem Grundkörper 2 an, so dass eine gute thermische Ankopplung gegeben ist. Dies wirkt sich günstig auf die Abfuhr der in den elektrischen Leitern 12 im Bereich der Wickelköpfe entstehenden Wärme über das Ständer-Blechpaket des Grundkörpers 2 aus.

Gemäß der Darstellung von FIG 7 weist das L-profilierte Führungselement 24 im Außenbereich der Knickkante zwischen dem L-Schenkel 24a und dem L-Boden 24b eine Ausnehmung 27 aufweist, in die ein L-Boden 28b eines weiteren L-profilierten Führungselements 28 eingreifen kann. So kann ein in axialer Richtung gestapelter und lagefixierter Aufbau mehrerer Führungselemente 24 bzw. 28 realisiert werden. Beispielhaft ist in FIG 8 eine Ausführungsform mit drei benachbart zueinander gestapelten Führungselementen 24, 28 und 29 gezeigt. Dabei sind die L-Böden 28b und 29b der Führungselemente 28 bzw. 29 in der Ausnehmung 27 des darunter liegenden Führungselements 24 bzw. 28 und der L-Boden 24b des untersten Führungselements 24 in einer analog ausgestalteten Ausnehmung 30 der Endscheibe 7 festgelegt.

Das Ausführungsbeispiel gemäß FIG 8 zeigt einen Zustand, bei dem die Führungselemente 24 und 28 bereits vollständig mit der Teilwicklung 26 bzw. mit einer Teilwicklung 31 bewickelt sind. Dagegen wird das dritte Führungselement 29 gerade mit den elektrischen Leitern 12 einer weiteren Teilwicklung 32 bewickelt.

Die Führung der elektrischen Leiter 12 erfolgt mittels eines Wickelhilfskörpers 33, der auf die Trennstege 9 der Endscheibe 7 aufgesetzt ist. Im Unterschied zum Wickelhilfskörper 16 ist seine Übergreifweite jedoch an die in axialer Richtung längere Abmessung des Stapelaufbaus aus den drei Führungselementen 24, 28 und 29 angepasst. Außerdem ist die Anlagefläche 25 für das dritte Führungselement 29 mittels einer Vertiefung 34 an der Unterseite 19 des Wickelhilfskörpers 33 ausgebildet. Dies ergibt eine sehr gute Lagefixierung des dritten Führungselements 29.

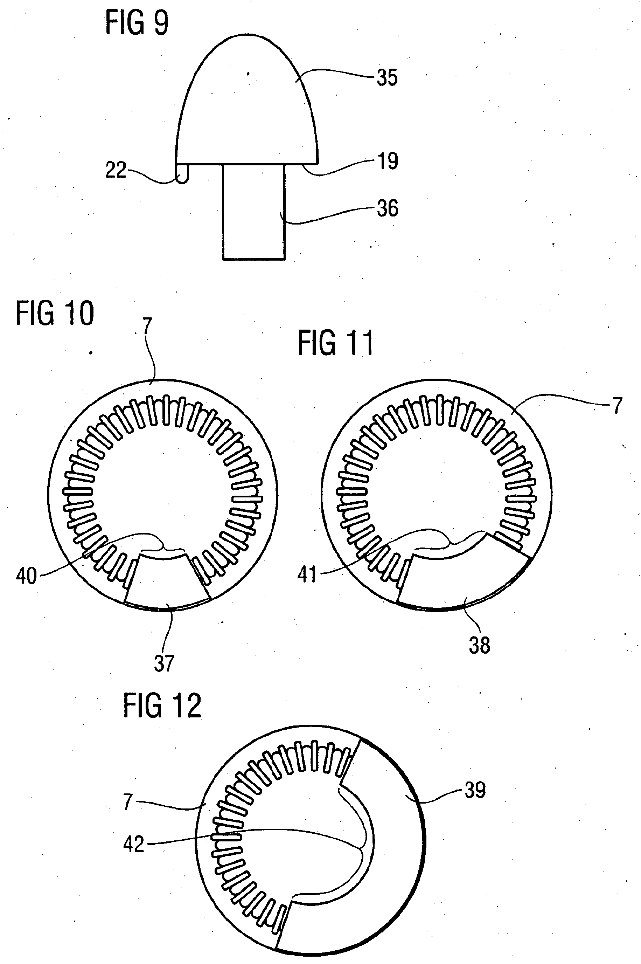

In FIG 9 ist ein weiteres Ausführungsbeispiel eines Wickelhilfskörpers 35 dargestellt. Im Unterschied zu den Wickelhilfskörpern 16 und 33 weist der Wickelhilfskörper 35 an seiner Unterseite 19 anstelle der Befestigungsaussparungen 20 mindestens einen Befestigungsfortsatz 36 auf, der sich axial nach unten von der Unterseite 19 wegerstreckt und zum Eingriff'in eine der Nuten 10 des Grundkörpers 2 bestimmt ist. Für die Dauer des Wickelvorgangs wird der Wickelhilfskörper 35 also unmittelbar am Grundkörper 2 eingesteckt. Eine Endscheibe 7 oder 8 wie bei den vorstehend beschriebenen Ausführungsbeispielen ist nicht erforderlich.

In FIG 10 bis 12 sind weitere Ausführungsbeispiele für Wickelhilfskörper 37, 38 bzw. 39 gezeigt, die in Verbindung mit der Endscheibe 7 oder 8 während des Wickelvorgangs eingesetzt werden. Sie unterscheiden sich in der Größe des jeweils abgedeckten Kreisbogenabschnitts. Die Wickelhilfskörper 37 bis 39 sind jeweils für unterschiedliche Ausführungsformen der elektrischen Maschine 1 bestimmt. Insbesondere lassen sich so Wicklungssysteme 13 mit verschiedenen Polzahlen realisieren. Die Wickelhilfskörper 37 bis 39 haben jeweils einen anderen Überdeckungsbereich 40, 41 bzw. 42. Es wird jeweils eine andere Zahl an Nutstirnöffnungen 14 abgedeckt und für die Führung des elektrischen Leiters 12 überbrückt. Die jeweils mit eingesetzten - in FIG 10 bis 12 nicht sichtbaren - Führungselemente überdecken den gleichen Kreisbogenabschnitt wie die Wickelhilfskörper 37 bis 39.

Durch den Einsatz der Wickelhilfskörper 16, 33, 35, 37, 38 oder 39 und insbesondere auch der Führungselemente 23, 24, 28 oder 29 wird eine exakte Formung des Wicklungssystems 13 im Bereich der Stirnseiten 5 und 6, also eine exakte Formung der Wickelköpfe, erreicht. Insbesondere lassen sich auf diese Weise Wickelköpfe mit einer vergleichsweise großen radialen und kurzen axialen Abmessung realisieren. Insbesondere wird der radiale Platz bis zum Außenumfang des Grundkörpers 2 praktisch vollständig genutzt. Aufgrund dieser guten Raumausnutzung in radialer Richtung resultiert die Verkürzung in axialer Richtung, so dass auch andere Komponenten der elektrischen Maschine 1 wie z.B. das Gehäuse und/oder die Lagerschilde axial verkürzt ausgeführt werden können. Dadurch reduziert sich der Materialeinsatz. Außerdem werden die elektrischen Betriebsdaten der elektrischen Maschine verbessert. So erhöht sich beispielsweise der Wirkungsgrad aufgrund geringerer Kupferverluste.

Außerdem ermöglicht der Einsatz der Wickelhilfskörper 16, 33, 35, 37, 38 oder 39 und insbesondere auch der Führungselemente 23, 24, 28 oder 29 eine vergleichbare Ausgestaltung der verschiedenen Teilwicklungen 26, 31, und 32 des Wicklungssystems 13. Insbesondere haben diese Teilwicklungen 26, 31, und 32 eine praktisch gleiche oder zumindest sehr ähnliche mittlere Spulenlänge sowie einen im Wesentlichen gleichen elektrischen Widerstand.

## Patentansprüche

1. Elektrische Maschine mit einer Drehachse (3) und einem Grundkörper (2), der zwei axiale Stirnseiten (5, 6) sowie Nuten (10) zur Aufnahme von elektrischen Leitern (12) eines Wicklungssystems (13) enthält, wobei
a) die Nuten (10) an den Stirnseiten (5, 6) jeweils eine Nutstirnöffnung (14) aufweisen,
b) die elektrischen Leiter (12), an einer der Stirnseiten (5, 6)
b1) aus mindestens einer der Nutstirnöffnungen (14) herausgeführt sind,
b2) innerhalb eines in Umfangsrichtung an der Stirnseite (5, 6) verlaufenden Überbrückungsbereichs (15; 40; 41; 42) verlegt sind, und
b3) in mindestens eine andere der Nutstirnöffnungen (14) eingeführt sind,
c) an der Stirnseite (5, 6) im Überbrückungsbereich (15; 40; 41; 42) ein erstes Führungselement (23; 24) zur Führung der elektrischen Leiter (12) einer ersten Teilwicklung (26) des Wicklungssystems (13) angeordnet ist,
d) an der Stirnseite (5, 6) eine Endscheibe (7, 8) mit mindestens einem axial vorstehenden Trennelement (9) angeordnet ist und das erste Führungselement (23; 24) mit einem Boden (23c; 24b) an dem Trennelement (9) anliegt, und
e) das erste Führungselement (23; 24) in Umfangsrichtung verläuft und die Form eines Kreisbogenabschnitts hat.

2. Elektrische Maschine nach Anspruch 1, **dadurch gekennzeichnet, dass** das erste Führungselement (23) U-profiliert ist.

3. Elektrische Maschine nach Anspruch 1, **dadurch gekennzeichnet, dass** das erste Führungselement (24) L-profiliert ist.

4. Elektrische Maschine nach Anspruch 1, **dadurch gekennzeichnet, dass** axial benachbart zum ersten Führungselement (24) ein weiteres Führungselement (28) zur Führung der elektrischen Leiter (12) einer weiteren Teilwicklung (31) des Wicklungssystems (13) angeordnet ist.

5. Elektrische Maschine nach Anspruch 4, **dadurch gekennzeichnet, dass** die Führungselemente (24, 28) stapelbar ausgebildet sind.

6. Elektrische Maschine nach Anspruch 1, **dadurch gekennzeichnet, dass** das erste Führungselement (24) einen Schenkel (24a) und einen Boden (24b) aufweist, die an einer Knickkante zusammenstoßen, und längs der Knickkante in einem von den elektrischen Leitern (12) abgewandten Außenbereich eine Ausnehmung (27) verläuft.

7. Elektrische Maschine nach Anspruch 1, **dadurch gekennzeichnet, dass** das erste Führungselement (23; 24) elektrisch isolierend ausgebildet ist.

8. Elektrische Maschine nach Anspruch 1, **dadurch gekennzeichnet, dass** das erste Führungselement (23; 24) aus einem Kunststoffmaterial besteht.

## Claims

1. Electrical machine with an axis of rotation (3) and a basic body (2), which contains two axial end sides (5, 6) and slots (10) for accommodating electrical conductors (12) of a winding system (13),
a) the slots (10) on the end sides (5, 6) each having a slot end opening (14),
b) the electrical conductors (12) on one of the end sides (5, 6)
b1) being passed out of at least one of the slot end openings (14),
b2) being laid within a bridging region (15; 40; 41; 42) running in the circumferential direction on the end side (5, 6), and
b3) being inserted into at least one other one of the slot end openings (14),
c) a first guide element (23; 24) for guiding the electrical conductors (12) of a first subwinding (26) of the winding system (13) being arranged on the end side (5, 6) in the bridging region (15; 40; 41; 42),
d) an end plate (7, 8) with at least one axially protruding separating element (9) being arranged on the end side (5, 6) and the first guide element (23; 24) bearing against the separating element (9) with a base (23c; 24b), and
e) the first guide element (23; 24) running in a circumferential direction and having the form of a circular arc segment.

2. Electrical machine according to Claim 1, **characterized in that** the first guide element (23) has a U profile.

3. Electrical machine according to Claim 1, **characterized in that** the first guide element (24) has an L profile.

4. Electrical machine according to Claim 1, **characterized in that** a further guide element (28) for guiding the electrical conductors (12) of a further subwinding (31) of the winding system (13) is arranged axially adjacent to the first guide element (24).

5. Electrical machine according to Claim 4, **characterized in that** the guide elements (24, 28) are designed to be stackable.

6. Electrical machine according to Claim 1, **characterized in that** the first guide element (24) has a limb (24a) and a base (24b), which abut one another at a bending edge, and a cutout (27) runs along the bending edge in an outer region facing away from the electrical conductors (12).

7. Electrical machine according to Claim 1, **characterized in that** the first guide element (23; 24) is designed to be electrically insulating.

8. Electrical machine according to Claim 1, **characterized in that** the first guide element (23; 24) is made from a plastic material.

## Revendications

1. Machine électrique ayant un axe (3) de rotation et un corps (2) de base, lequel comporte deux côtés (5, 6) frontaux axiaux ainsi que des encoches (10) de réception de conducteurs (12) électriques d'un système (13) d'enroulement, dans laquelle
a) les encoches (10) ont, sur les côtés (5, 6) frontaux, respectivement une ouverture (14) frontale d'encoche,
b) les conducteurs (12) électriques, sur l'un de côtés (5, 6) frontaux,
b1) sont sortis d'au moins l'une des ouvertures (14) frontales d'encoche,
b2) sont posés dans une région (15 ; 40 ; 41 ; 42) de dérivation, s'étendant dans la direction périphérique sur le côté (5, 6) frontal et
b3) sont introduits dans au moins une autre des ouvertures (14) frontales d'encoche,
c) sur le côté (5, 6) frontal est disposé, dans la région (15 ; 40 ; 41 ; 42) de dérivation, un premier élément (23 ; 24) de guidage pour guider le conducteur (12) électrique d'un premier sous-enroulement (26) du système (13) d'enroulement,
d) sur le côté (5, 6) frontal est disposé un flasque (7, 8) ayant au moins un élément (9) de séparation en saillie axialement et le premier élément (23 ; 24) de guidage s'applique à l'élément (9) de séparation par un fond (23c ; 24b) et
e) le premier élément (23 ; 24) de guidage s'étend dans la direction périphérique et a la forme d'un segment d'arc de cercle.

2. Machine électrique suivant la revendication 1, **caractérisée en ce que** le premier élément (23) de guidage est profilé en U.

3. Machine électrique suivant la revendication 1, **caractérisée en ce que** le premier élément (24) de guidage est profilé en L.

4. Machine électrique suivant la revendication 1, **caractérisée en ce que**, au voisinage axialement du premier élément (24) de guidage, est disposé un autre élément (28) de guidage pour guider le conducteur (12) électrique d'un autre sous enroulement (31) du système (13) d'enroulement.

5. Machine électrique suivant la revendication 4, **caractérisée en ce que** les éléments (24, 28) de guidage sont constitués de manière à pouvoir être empilés.

6. Machine électrique suivant la revendication 1, **caractérisée en ce que** le premier élément (24) de guidage a une branche (24a) et un fond (24b), qui se rencontrent en un bord coudé et un évidement (27) s'étend le long du bord coudé, dans une région extérieure éloignée des conducteurs (12) électriques.

7. Machine électrique suivant la revendication 1, **caractérisée en ce que** le premier élément (23 ; 24) de guidage est constitué de manière isolée électriquement.

8. Machine électrique suivant la revendication 1, **caractérisée en ce que** le premier élément (23 ; 24) de guidage est en une matière plastique.
